# EUROPEAN PATENT SPECIFICATION

(11) **EP 3 357 858 B1**
(45) Date of publication and mention of the grant of the patent: **26.04.2023**
(21) Application number: 17154718.5
(22) Date of filing: 03.02.2017
(51) Int. Cl.: B66D 1/38, D07B 1/14, D07B 1/16

(54) **A SNOW GROOMER**
EINE PISTENRAUPE
UNE DAMEUSE

(43) Date of publication of application: 08.08.2018
(73) Proprietor: PRINOTH S.p.A., Vipiteno (BZ) (IT)
(72) Inventor: MAURER, Gregor, 39049 VIPITENO (IT)
(74) Representative: Eccetto, Mauro

(56) References cited:
- EP-A1- 1 331 198
- EP-A1- 1 418 267
- WO-A1-2010/095016
- WO-A1-2011/110547
- WO-A1-2015/110791
- CN-U- 204 643 680
- FR-A- 1 239 298
- JP-A- H01 266 289
- JP-A- H07 117 989
- US-A1- 2009 078 922
- US-A1- 2015 298 597
- US-A1- 2016 056 621
- US-B1- 7 429 031
- Anonymous: "WIRE ROPE HAND BOOK", , 22 September 2015 (2015-09-22), XP055365963, Retrieved from the Internet: URL:https://web.archive.org/web/2015092207 2023/http://www.ushamartin.com/wp-content/ uploads/2014/04/Wire-Rope-Handbook.pdf [retrieved on 2017-04-20]
- Anonymous: "Surface Mining", , 31 December 2012 (2012-12-31), XP055366015, Retrieved from the Internet: URL:http://www.bridon.com/x/downloads/sufa cemining/Surface Mining Brochure.pdf [retrieved on 2017-04-20]
- Anonymous: "Wholesale PU Coating Galvanized Wire Rope Winch with Chain Hook 3000kg - Alibaba.com", , 26 April 2017 (2017-04-26), XP055367495, Retrieved from the Internet: URL:https://wholesaler.alibaba.com/product -detail/PU-Coating-Galvanized-Wire-Rope-Wi nch_60631058987.html?spm=a2700.7782932.199 8701000.2.8dmlJ1 [retrieved on 2017-04-26]
- Anonymous: "Slings & Winch Cables", , 2 April 2016 (2016-04-02), XP055367564, Retrieved from the Internet: URL:https://web.archive.org/web/2016040202 0957/http://www.e-rigging.com/Slings-Winch -Cables [retrieved on 2017-04-26]
- Anonymous: "PistenBully 400", , 5 November 2016 (2016-11-05), XP055419322, Retrieved from the Internet: URL:https://web.archive.org/web/2016110523 5629/https://www.pistenbully.com/deu/en/ve hicles/alpine/400.html [retrieved on 2017-10-26]

## Description

### The present invention relates to a snow groomer.

**In order to move along steep snow-covered slopes, snow groomers are equipped with respective winch assemblies, each of which comprises a rope, the free end of which is secured to an anchor point so as to prevent the respective vehicle from losing grip on the trail downstream of the anchor point.**

**Depending on the direction and speed of travel of the snow groomer, the rope is respectively wound around and unwound from a reel in such a way that the rope is kept in tension. The rope must be opportunely guided by a control device for being wound onto the drum in an orderly manner and opportunely oriented with respect to the anchor point. Snowgroomers of the above type and according to the preamble of claim 1 are disclosed in** WO 2011/110547**,** WO 2010/095016**,** EP 1,331,198 **and https://web.archive.org/web20161105235629/https://www.pistenbu lly.com/deu/en/vehicles/alpine/400.html.**

**The unwound portion of the rope extending between the snow groomer and the anchor point may however come into contact with rocks, stones, trees, snow and the ground, with the risk of becoming soiled and damaged and of contaminating and damaging the winch assembly.**

**One object of the present invention is to provide a snowgroomer that mitigates the drawbacks of the known art.**

**In accordance with the present invention, a snowgroomer for preparing snow runs is provided the snow groomer comprising a winch assembly comprising a supporting structure configured for being mounted on board the snow groomer, a rope, a motorized reel for selectively winding and unwinding the rope, and a rope control device for guiding and tensioning the rope with respect to the reel, a cleaning device for cleaning the outer face of the rope, and an inspection device for inspecting the conditions of the rope; a cab for housing the driver; an interface for informing the driver about the conditions of the rope, wherein the rope has a substantially circular cross-section and comprises a core, a plurality of strands arranged around the core, and a sheath, which is arranged around the strands and is made of a polymer material for sealing and protecting the strands from the outside.**

**Thanks to the present invention, it is possible to protect the strands from direct contact with rocks, earth, stones, trees, etc., and keep the lubricant inside the sheath. Furthermore, thanks to the sheath, the outer surface of the rope can be smooth and, in consequence, incapable of collecting possible foreign bodies that might compromise correct operation of the winch assembly. The smooth surface of the sheath facilitates the rope cleaning operation and the cleaned rope is easier to check.**

**Safety conditions are increased by the constant monitoring of the rope's condition.**

**In particular, the core and/or the strands are made of metal or a synthetic material. In practice, various combinations of materials are possible for endowing the rope with the preferable technical characteristics, according to usage. For example, a rope made of a synthetic material is lighter than a metal rope, which is stronger than a synthetic rope of the same dimensions.**

**In particular, the sheath comprises first particles, which are embedded in the polymer material and endow the sheath with light reflecting properties in the visible spectrum.**

**The particles embedded in the sheath enable identifying the rope and signalling its presence to potential ski tourists when light is shone on the rope.**

**In alternative or in addition to the particles with reflective properties, the sheath comprises second particles, which are embedded in the polymer material and endow the sheath with photo-luminescent properties. In this way, the rope is visible at night even when light is not shone on it.**

**In alternative or in addition to the particles with reflective and photo-luminescent properties, the sheath comprises third particles, which are embedded in the polymer material and endow the sheath with lubricant properties.**

**In this way, friction between the rope and external elements and between the sheath and the strands is reduced.**

**In alternative or in addition to the particles with reflective, photo-luminescent and lubricant properties, the sheath comprises fourth particles, which are embedded in the polymer material and endow the sheath with a colour that improves visibility of the rope. This expedient enables further improving visibility of the rope also in daytime usage.**

**Preferably, the polymer material is selected from one of the following material families: rubber, PVC, and polyethylene. Furthermore, the thickness of the sheath is less than a fourth of the maximum radius of the rope without the sheath.**

**Preferably, the sheath is extruded around the sheathless rope. In particular, the polymer material is transparent so that the embedded reflective or photo-luminescent particles can perform their functions. Furthermore, a transparent or semitransparent sheath allows inspecting the rope to identify possible anomalies in the strands.**

**In particular, the polymer material is elastic so as to allow an elastic lengthening of the sheath substantially equal to or greater than the elastic lengthening of the strands.**

**In particular, the winch assembly comprises a supporting structure configured for being mounted on board a crawler vehicle; a rope, which has a substantially circular cross-section and comprises a core, a plurality of strands arranged around the core, and a sheath, which is arranged around the strands and is made of a polymer material for sealing and protecting the strands from the outside; a motorized reel for selectively winding and unwinding the rope; and a rope control device for guiding and tensioning the rope with respect to the reel.**

**The sheath enables the control device to operate with greater precision in positioning the rope.**

**In particular, the inspection device comprises at least one optical sensor for acquiring data on the rope. In this way, it is possible to check the integrity of the sheath.**

**In addition or in alternative to the optical sensor, the inspection device comprises at least one magneto-inductive sensor for acquiring data on the rope. In this way, it is possible to detect any anomalies in the strands.**

**In one particular embodiment, the winch assembly comprises a lighting device for lighting the rope. In particular, the rope unwound from the winch is charged with photo-luminescent particles, in particular phosphorescent ones, and is able to release photons with slow decay when lit by the lighting device.**

**In particular, the crawler vehicle comprises a control unit for emitting signals correlated to the condition of the rope in function of last acquired data on the rope and stored data on the rope.**

**Other characteristics and advantages of the present invention will become apparent from the description that follows of a non-limitative embodiment, with reference to the accompanying drawings, in which:**
- **Figure 1** **is a side elevation view, with parts removed for clarity, of a snow groomer made in accordance with the present invention;**
- **Figure 2** **is a perspective view, with parts removed for** clarity and on a larger scale, of a winch assembly of the snow groomer shown in Figure 1, and
- Figure 3 is a perspective view, on an enlarged scale, with parts removed for clarity and in section, of the rope of the winch assembly in Figure 2.

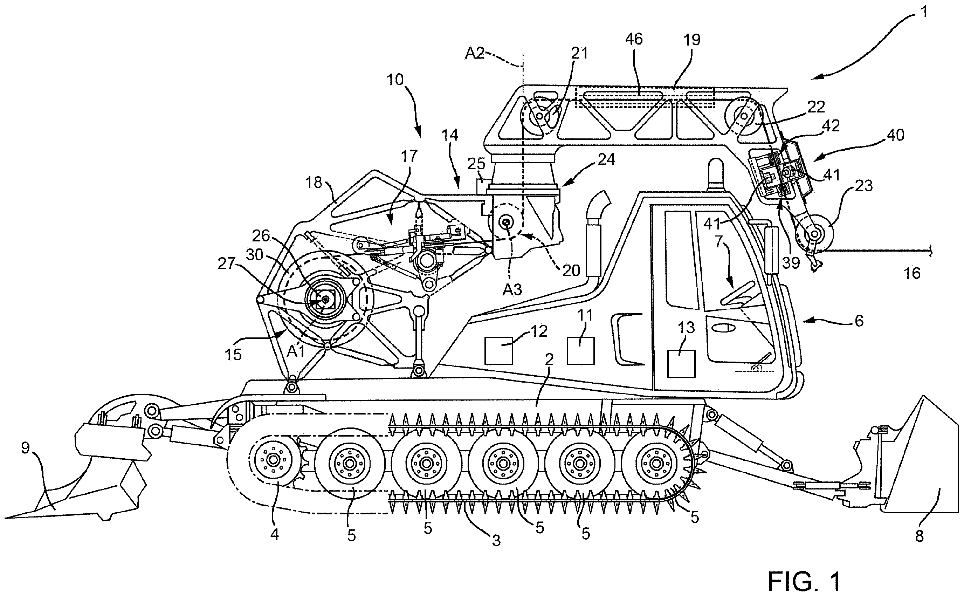

Referring to Figure 1, reference numeral 1 indicates, as a whole, a crawler vehicle, in this case a snow groomer, which comprises a frame 2; two tracks 3 (only one shown in Figure 1); two drive wheels 4 (only one shown in Figure 1) operatively coupled to the respective tracks 3; idle wheels 5 supporting the tracks 3; a cab 6; a user interface 7 arranged in the cab 6; a front-mounted blade 8 supported by the frame 2; a rear-mounted tiller 9 supported by the frame 2; a winch assembly 10 fixed on top of the frame 2; an internal combustion engine 11; and a power drivetrain 12, operatively connected to the internal combustion engine 11, and to the drive wheels 4, the blade 8, the tiller 9 and the winch assembly 10. The power drivetrain 12 can be hydraulic or electric or a hydraulic-electric combination.

The snow groomer 1 comprises a control unit 13 connected to the user interface 7 and designed to control the crawler vehicle 1 and the winch assembly 10.

The winch assembly 10 comprises a supporting structure 14 mounted on the frame 2, a reel 15 supported by the supporting structure 14 in a rotatable manner about an axis A1, a rope 16 having one end fixed to the reel 15 and wound onto the reel 15, and a control device 17 for controlling the rope 16 in the phases of unwinding from the reel 15 and winding onto the reel 15. In the case shown, the supporting structure 14 comprises a portion 18 integral with the frame 2 and a portion 19 mounted on portion 18 in a rotatable manner about an axis A2 to direct the rope 16 towards an anchor point of the rope 16 independently of the orientation of the crawler vehicle 1 with respect to an anchor point (not shown in the accompanying figures). Portion 18 of the supporting structure 14 supports the reel 15, an idle sheave 20 rotating about an axis A3 parallel to axis A1 of the reel 15, and the control device 17 that is arranged between the reel 15 and the idle sheave 20. Portion 19 comprises idle sheaves 21, 22 and 23.

The supporting structure 14 comprises a pivot 24 interposed between portion 18 and portion 19, and a motorized mechanism 25 operatively connected to the pivot 24 to selectively rotate portion 19 about axis A2 with respect to portion 18.

The winch assembly 1 also comprises an actuator assembly 26, which is operatively connected to reel 15 and is designed to rotate the reel 15 in opposite directions about axis A1, and a sensor 27 coupled to the reel 15 to detect the position of the reel 15 about axis A1. In fact, the angular position of the reel 15 enables calculating the amount of rope 16 wound on the reel 15 and the amount of rope 16 off the reel 15.

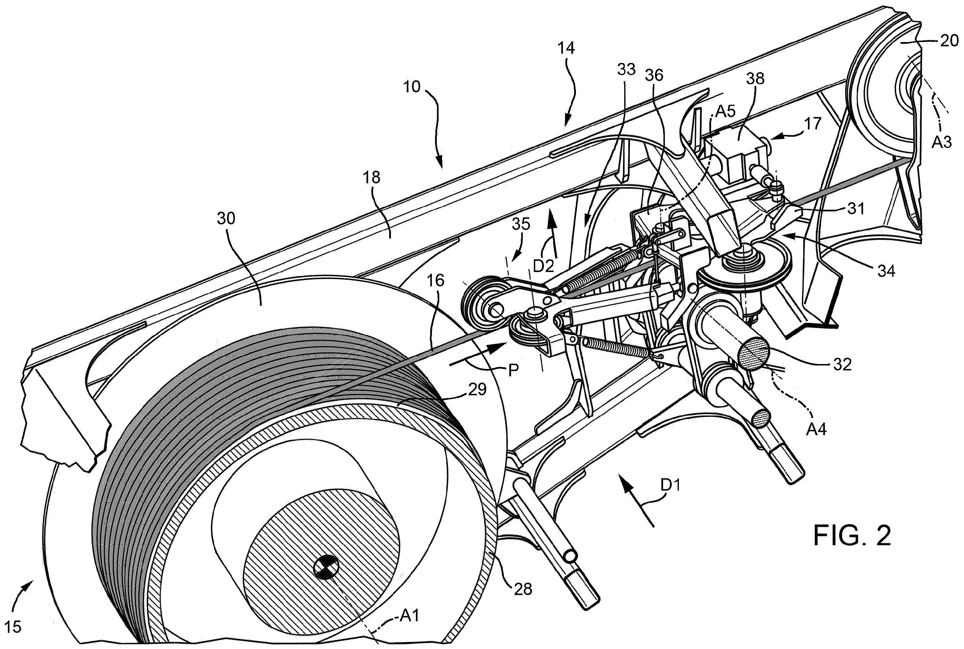

Referring to Figure 2, the reel 15 comprises a cylindrical body 28, along which there is a helical groove 29, and two flanges 30 perpendicular to axis A1. Only one of the two flanges 30 is shown in Figure 1. The flanges 30 have the function of holding the rope 16 in an ordered configuration, in particular when the rope wound onto one or more lengths of rope 16 previously wound in a helix. In view of the fact that the rope 16 is wound onto the reel 15 and unwound from the reel 15 in an ordered manner, it is possible to define the point of tangency of the rope 16 on the reel 15 at any time during operation.

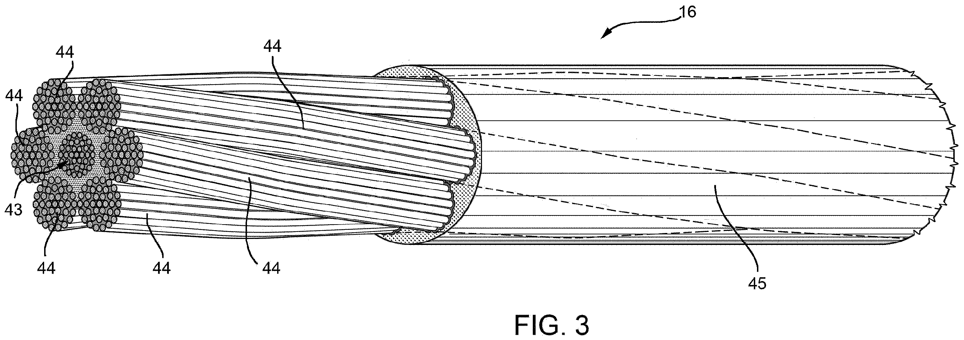

The control device 17 comprises a rope guide 31, which engages the rope 16 and is movable, with respect to the supporting structure 14, in a direction D1 parallel to the axis of the reel 15 (perpendicular to the plane of the paper in Figure 3); an actuator 32 to selectively move the rope guide 31 in direction D1; and a rocker arm 33, which engages the rope 16 and can oscillate with respect to the rope guide 31 about an axis A4 perpendicular to direction D1.

The rope guide 31 engages the rope 16 with guide 34, while the rocker arm 33 engages the rope 16 with guide 35. The rocker arm 33 comprises a base 36 mounted on the rope guide 31 in a rotatable manner about axis A4, and an appendix 37 mounted in a rotatable manner about an axis A5 with respect to the base 36. The axes A4 and A5 are transversal to each other and, in this case, are perpendicular to one another. The rocker arm 33 is actually articulated about axis A5, perpendicular to axis A4.

Referring to Figure 2, the control device 17 comprises an actuating device 38, in this case a hydraulic distributor, of the actuator 32. The actuating device 38 is mechanically connected to the rocker arm 33 in a way such that the rotation of the rocker arm 33 about axis A4 with respect to the rope guide 31 causes a variation in the state of the actuating device 38 and a given movement of the actuator 32 such as to re-establish the relative position between the rocker arm 33 and the rope guide 31.

Referring to Figure 1, the winch assembly 10 comprises a cleaning device 39, which intercepts the rope 16 and removes any impurities that have adhered to the outer face of the rope 16, and an inspection device 40 that acquires data related to the condition of the rope 16.

The inspection device 40 is arranged downstream of the cleaning device 39 in the winding direction of the rope 16. In practice, the inspection device 40 comprises optical sensors 41, for example cameras, to acquire images that are compared with the images of the rope 16 perfectly intact in the control unit 13, which informs the driver of the crawler vehicle 1 on the condition of the rope 16 via the interface 7.

In alternative or in addition to the optical sensors 41, the inspection device 40 comprises at least one magneto-inductive sensor for acquiring data related to the integrity of the rope 16, in particular of the strands. Also in this case, the acquired data is compared with stored data on the rope 16 and a signal related to the condition of the rope 16 is made available on the interface 7 through processing performed by the control unit 13.

Referring to Figure 3, the rope 16 has a substantially circular cross-section and comprises a core 43, a plurality of strands 44 arranged around the core 43, and a sheath 45, which is arranged around the strands 44 and is made of a polymer material for sealing and protecting the strands 44 from the outside.

The core 43 can be made of metal or a synthetic material. Likewise, the strands 44 can be made of metal or a synthetic material.

The sheath 45 comprises particles that are embedded in the polymer material and endow the sheath 45 with light reflecting properties in the visible spectrum or fluorescent properties. In addition or in alternative, the sheath 45 comprises particles that are embedded in the polymer material and endow the sheath 45 with photo-luminescent properties, in particular phosphorescent properties.

The sheath 45 comprises further particles that are embedded in the polymer material and endow the sheath 45 with lubricant properties.

Furthermore, the sheath 45 can comprise particles that are embedded in the polymer material and endow the sheath 45 with **a colour improving visibility of the rope 16, also for daytime usage.**

**The polymer material is selected from one of the following material families: rubber, PVC, and polyethylene. The polymer material is transparent so that the strands can be seen. Furthermore, the polymer material is elastic with an elasticity greater or equal to the elasticity of the strands 44. A rope 16 with a load bearing structure in steel commonly has a theoretical elongation of approximately 0.8% of the length of the rope 16, while a rope 16 with a load bearing structure in a synthetic material has a theoretical elongation in the range 1-2% of the length of the rope 16. The sheath in a polymer material has an elasticity capable of following the variations in length of the load bearing structure, both for load bearing structures in steel and load bearing structures in a synthetic material.**

**In the case where the rope 16 is charged with photo-luminescent particles, in particular phosphorescent ones, the winch assembly 10 and/or the snow groomer 1 are/is equipped with a lighting device for lighting the rope 16.**

**Referring to** **Figure 1****, the winch assembly 10 comprises a lighting device 46 arranged close to a transit area of the rope 16 to transfer photons to the rope 16, and excite the particles to subsequently release photons, in particular when the rope 16 has left structure portion 19.**

**Referring to** **Figure 3****, the thickness of the sheath 45 is less than a fourth of the maximum radius of the rope 16 without the sheath and the sheath is produced around the sheathless rope 16 by means of an extrusion process.**

## Claims

1. **A snow groomer for preparing snow runs, the snow groomer comprising a winch assembly (10) comprising a supporting structure (14) configured for being mounted on board the snow groomer (1), a rope (16), a motorized reel (15) for selectively winding and unwinding the rope (16), and a rope control device (17) for guiding and tensioning the rope (16) with respect to the reel (15), characterized by a cleaning device (39) for cleaning the outer face of the rope (16), and an inspection device (40) for inspecting the conditions of the rope (16); a cab (6) for housing the driver; an interface (7) for informing the driver about the conditions of the rope (16), wherein the rope (16) has a substantially circular cross-section and comprises a core (43), a plurality of strands (44) arranged around the core (43), and a sheath (45), which is arranged around the strands (44) and is made of a polymer material for sealing and protecting the strands (44) from the outside.**

2. **The snowgroomer as claimed in Claim 1, wherein the core (43) and/or the strands (44) are made of metal or a synthetic material.**

3. **The snowgroomer as claimed in Claim 1 or 2, wherein the sheath (45) comprises first particles, which are embedded in the polymer material and endow the sheath (45) with light reflecting properties in the visible spectrum or fluorescent properties.**

4. **The snowgroomer as claimed in any one of the foregoing Claims, wherein the sheath (45) comprises second particles, which are embedded in the polymer material and endow the sheath (45) with photo-luminescent properties, in particular phosphorescent properties.**

5. **The snowgroomer as claimed in any one of the foregoing Claims, wherein the sheath (45) comprises third particles, which are embedded in the polymer material and endow the sheath (45) with lubricant properties.**

6. **The snowgroomer as claimed in any of the foregoing claims, wherein the sheath (45) comprises fourth particles, which are embedded in the polymer material and endow the sheath (45) with a colour improving visibility of the rope (16).**

7. **The snowgroomer as claimed in any one of the foregoing Claims, wherein the polymer material is selected from one of the following material families: rubber, PVC, and polyethylene.**

8. **The snowgroomer as claimed in any one of the foregoing Claims, wherein the thickness of the sheath (45) is less than a fourth of the maximum radius of the rope without the sheath.**

9. **The snowgroomer as claimed in any one of the foregoing Claims, wherein the sheath (45) is extruded around the sheathless rope.**

10. **The snowgroomer as claimed in any one of the foregoing Claims, wherein the polymer material is transparent.**

11. **The snowgroomer as claimed in any one of the foregoing Claims, wherein the polymer material is elastic.**

12. **The snowgroomer as claimed in any one of the foregoing Claims, wherein the inspection device (40) comprises at least one optical sensor (41) for acquiring data on the rope (16).**

13. **The snowgroomer as claimed in any one of the foregoing Claims , wherein the inspection device (40) comprises at least one magneto-inductive sensor (42) for acquiring data on the rope (16).**

14. **The snowgroomer as claimed in any one of the foregoing Claims, and comprising a lighting device (46) for lighting the rope (16).**

15. **The snowgroomer as claimed in any one of the foregoing Claims, and comprising a control unit (13) for emitting signals correlated to the condition of the rope (16) in function of last acquired data on the rope (16) and stored data on the rope (16).**

## Patentansprüche

1. Pistenfahrzeug zum Präparieren von Schneepisten, wobei das Pistenfahrzeug eine Windenanordnung (10) umfasst, die eine Stütz- bzw. Trägerstruktur (14), die konfiguriert ist, an Bord des Pistenfahrzeugs (1) montiert zu sein, ein Seil (16), eine motorisierte Rolle (15) zum selektiven Auf- und Abwickeln des Seils (16), und eine Seilsteuer- bzw. -kontrollvorrichtung (17) zum Führen und Spannen des Seils (16) in Bezug auf die Rolle (15) umfasst, **gekennzeichnet durch** eine Reinigungsvorrichtung (39) zum Reinigen der Außenfläche bzw. -seite des Seils (16) und eine Prüfvorrichtung (40) zum Prüfen des Zustands bzw. der Bedingungen des Seils (16), eine Kabine (6) zur Unterbringung des Fahrers; eine Schnittstelle (7) zum Informieren des Fahrers über den Zustand des Seils (16), wobei das Seil (16) einen im Wesentlichen kreisförmigen Querschnitt aufweist und einen Kern (43), eine Mehrzahl von Litzen (44), die um den Kern (43) herum angeordnet sind, und einen um die Litzen (44) herum angeordneten Mantel (45) aus einem Polymermaterial zum Abdichten und Schützen der Litzen (44) gegenüber der Außenseite umfasst.

2. Pistenfahrzeug nach Anspruch 1, wobei der Kern (43) und/oder die Litzen (44) aus Metall oder einem synthetischen Material bestehen.

3. Pistenfahrzeug nach Anspruch 1 oder 2, wobei der Mantel (45) erste Partikel umfasst, die in das Polymermaterial eingebettet sind und dem Mantel (45) lichtreflektierende Eigenschaften in dem sichtbaren Spektrum oder fluoreszierende Eigenschaften verleihen.

4. Pistenfahrzeug nach einem der vorhergehenden Ansprüche, wobei der Mantel (45) zweite Partikel umfasst, die in das Polymermaterial eingebettet sind und dem Mantel (45) photolumineszierende Eigenschaften, insbesondere phosphoreszierende Eigenschaften, verleihen.

5. Pistenfahrzeug nach einem der vorhergehenden Ansprüche, wobei der Mantel (45) dritte Partikel umfasst, die in das Polymermaterial eingebettet sind und dem Mantel (45) Schmiereigenschaften verleihen.

6. Pistenfahrzeug nach einem der vorhergehenden Ansprüche, wobei der Mantel (45) vierte Partikel umfasst, die in das Polymermaterial eingebettet sind und dem Mantel (45) eine Farbe verleihen, die eine Sichtbarkeit des Seils (16) verbessert.

7. Pistenfahrzeug nach einem der vorhergehenden Ansprüche, wobei das Polymermaterial aus einer der folgenden Materialfamilien ausgewählt ist: Gummi, PVC und Polyethylen.

8. Pistenfahrzeug nach einem der vorhergehenden Ansprüche, wobei die Dicke des Mantels (45) weniger als ein Viertel des maximalen Radius des Seils ohne den Mantel beträgt.

9. Pistenfahrzeug nach einem der vorhergehenden Ansprüche, wobei der Mantel (45) um das mantellose Seil herum extrudiert ist.

10. Pistenfahrzeug nach einem der vorhergehenden Ansprüche, wobei das Polymermaterial transparent ist.

11. Pistenfahrzeug nach einem der vorhergehenden Ansprüche, wobei das Polymermaterial elastisch ist.

12. Pistenfahrzeug nach einem der vorhergehenden Ansprüche, wobei die Inspektionseinrichtung (40) zumindest einen optischen Sensor (41) zum Erfassen von Daten des Seils (16) umfasst.

13. Pistenfahrzeug nach einem der vorhergehenden Ansprüche, wobei die Inspektionseinrichtung (40) zumindest einen magnetinduktiven Sensor (42) zum Erfassen von Daten des Seils (16) umfasst.

14. Pistenfahrzeug nach einem der vorhergehenden Ansprüche, und umfassend eine Beleuchtungsvorrichtung (46) zum Beleuchten des Seils (16).

15. Pistenfahrzeug nach einem der vorhergehenden Ansprüche, und umfassend eine Steuer- bzw. Regeleinheit (13) zum Emittieren von mit dem Zustand des Seils (16) korrelierten Signalen in Abhängigkeit von zuletzt erfassten Daten zu dem Seil (16) und gespeicherten Daten zu dem Seil (16).

## Revendications

1. Dameuse pour la préparation de pistes de neige, la dameuse comprenant un ensemble de treuil (10) comprenant une structure de support (14) configurée pour être montée à bord de la dameuse (1), un câble (16), une bobine motorisée (15) pour l'enroulement et le déroulement sélectifs du câble (16), et un dispositif de commande de câble (17) pour le guidage et la mise sous tension du câble (16) par rapport à la bobine (15), **caractérisé par** un dispositif de nettoyage (39) pour le nettoyage de la face extérieure du câble (16), et un dispositif d'inspection (40) pour l'inspection des conditions du câble (16) ; une cabine (6) pour le logement du conducteur ; une interface (7) pour informer le conducteur des conditions du câble (16), dans lequel le câble (16) présente une section transversale sensiblement circulaire et comprend un coeur (43), une pluralité de brins (44) agencés autour du coeur (43), et une gaine (45) qui est agencée autour des brins (44) et est réalisée en un matériau de polymère pour rendre étanche et protéger les brins (44) de l'extérieur.

2. Dameuse selon la revendication 1, dans laquelle le coeur (43) et/ou les brins (44) sont réalisés en métal ou en un matériau synthétique.

3. Dameuse selon la revendication 1 ou 2, dans laquelle la gaine (45) comprend des premières particules qui sont intégrées dans le matériau de polymère et dotent la gaine (45) de propriétés réfléchissant la lumière dans le spectre visible ou de propriétés fluorescentes.

4. Dameuse selon l'une quelconque des revendications précédentes, dans laquelle la gaine (45) comprend des deuxièmes particules qui sont intégrées dans le matériau de polymère et dotent la gaine (45) de propriétés photoluminescentes, en particulier de propriétés phosphorescentes.

5. Dameuse selon l'une quelconque des revendications précédentes, dans laquelle la gaine (45) comprend des troisièmes particules qui sont intégrées dans le matériau de polymère et dotent la gaine (45) de propriétés lubrifiantes.

6. Dameuse selon l'une quelconque des revendications précédentes, dans laquelle la gaine (45) comprend des quatrièmes particules qui sont intégrées dans le matériau de polymère et dotent la gaine (45) d'une couleur améliorant la visibilité du câble (16).

7. Dameuse selon l'une quelconque des revendications précédentes, dans laquelle le matériau de polymère est sélectionné à partir d'une des familles de matériau suivantes : caoutchouc, PVC, et polyéthylène.

8. Dameuse selon l'une quelconque des revendications précédentes, dans laquelle l'épaisseur de la gaine (45) est inférieure à un quart du rayon maximum du câble sans la gaine.

9. Dameuse selon l'une quelconque des revendications précédentes, dans laquelle la gaine (45) est extrudée autour du câble sans gaine.

10. Dameuse selon l'une quelconque des revendications précédentes, dans laquelle le matériau de polymère est transparent.

11. Dameuse selon l'une quelconque des revendications précédentes, dans laquelle le matériau de polymère est élastique.

12. Dameuse selon l'une quelconque des revendications précédentes, dans laquelle le dispositif d'inspection (40) comprend au moins un capteur optique (41) pour l'acquisition de données sur le câble (16).

13. Dameuse selon l'une quelconque des revendications précédentes, dans laquelle le dispositif d'inspection (40) comprend au moins un capteur magnéto-inductif (42) pour l'acquisition de données sur le câble (16).

14. Dameuse selon l'une quelconque des revendications précédentes, et comprenant un dispositif d'éclairage (46) pour l'éclairage du câble (16).

15. Dameuse selon l'une quelconque des revendications précédentes, et comprenant une unité de commande (13) pour l'émission de signaux corrélés à la condition du câble (16) en fonction des dernières données acquises sur le câble (16) et des données stockées sur le câble (16).
